# EUROPEAN PATENT APPLICATION

(11) **EP 4 509 282 A1**
(43) Date of publication of application: **19.02.2025**
(21) Application number: 23191748.5
(22) Date of filing: 16.08.2023
(51) Int. Cl.: B25J 15/06, F16K 15/14

(54) **A SELF-CLOSING VALVE**

(71) Applicant: IMEC VZW, 3001 Heverlee (BE); Vrije Universiteit Brussel, 1050 Brussel (BE)
(72) Inventor: Wang, Zhangwei, 3001 Leuven (CN); Vanderborght, Bram, 3001 Leuven (BE); Terryn, Seppe, 3001 Leuven (BE)
(74) Representative: Patent Department IMEC

(57) **Abstract**

The valve comprises a fluid channel (20) extending in a longitudinal direction between an inlet section (21) and an outlet section (22) of said channel. The valve is configured to be directly or indirectly coupled to an underpressure source at the channel's outlet section. The fluid channel has an inner and an outer surface (23,24). The valve further comprises a flexible film (8) mounted in the channel (20) and oriented transversely with respect to said longitudinal direction. The film comprises apertures (9) which are located and dimensioned so that said apertures are displaced in the direction of the inner surface (23) of the channel when the film is flexed in the direction of the outlet section (22) under the influence of a pressure difference between the two sides of the film when the valve is coupled to an underpressure, and when the inlet section (21) is at least partially open. Within a given range of underpressures, the displacement of the apertures (9) is such that fluid flow through the channel (20) is blocked or significantly restricted, which constitutes a self-closing function of the valve.

## Description

### Field of the Invention

The present invention is related to a valve applicable for example in a suction cup for a vacuum gripper which is a tool for gripping and transporting objects and structures through vacuum-induced forces.

### State of the art.

Vacuum grippers are usually equipped with a regular array of suction cups coupled to a vacuum source. In most grippers, all the cups in the array are continuously coupled to the vacuum source when the latter is activated. When the surface of the object that needs to be gripped is flat and larger than the array, this is not a problem as all the cups are effectively in contact with the object surface and contributing to the gripping action. However for objects having a smaller contact surface, not all the cups of the array are actively gripping the object, and those not in contact with the object are responsible for a loss of vacuum pressure and for a loss of gripping force of the active cups, unless compensated by the vacuum source which then raises the energy consumption of the source. This problem may also occur when gripping curved structures or structures with holes or pores.

Active and selective recruitment of individual cups within the array exists, but this capability relies on expensive and bulky systems including sensors, actuators, and control means. Passive self-closing suction cups have equally been developed. Such cups are provided with a vacuum valve downstream of the cup's gripping portion that closes off the air flow through the cup when it is not attached to an object. The valve is however a large rigid component that increases the complexity, the weight and the height of an average gripper. In currently known grippers comprising active or passive self-closing cups, the height of the cups is particularly problematic, as grippers are often required to work in confined spaces.

In general, self-closing valves known today are bulky and rigid components which are difficult to incorporate in tools which benefit from compactness and flexibility. This is not only the case for vacuum-operated implements, but also for liquid-operated implements such as hydraulic tools.

### Summary of the invention

The invention is related to a self-closing valve, to a self-closing suction cup and to an implement comprising one or more such self-closing valves or cups in accordance with the appended claims. Such implements include for example a vacuum gripper or a walking robot. The suction cup either consists of or comprises a valve in accordance with the invention. The valve according to the invention may also be used in combination with a standard suction cup or other vacuum-operated tools for realizing a self-closing function.

The valve comprises a fluid channel extending in a longitudinal direction between an inlet section and an outlet section of said channel. The valve is configured to be directly or indirectly coupled to an underpressure source at the channel's outlet section ('indirectly' meaning for example through additional tubes, channels and/or valves). The channel has an inner and an outer surface. The channel is preferably but not necessarily an axisymmetric hollow body.

The underpressure source is a tool for creating a pressure difference between the inlet section and the outlet section of the valve, with the pressure at the outlet section being lower than the pressure at the inlet section. The difference between said pressures is referred to as the underpressure. The underpressure source may be a pump, such as a vacuum pump when the valve is configured to conduct a gaseous fluid, such as air. When the valve is configured to conduct a liquid, the underpressure source may be a liquid pump.

In accordance with the invention, the valve further comprises a flexible film mounted in the channel and oriented transversely with respect to said longitudinal direction. The film may be attached to or integral with the inner surface of the channel. The film comprises apertures which are located, shaped and dimensioned so that said apertures are displaced in the direction of the inner surface of the channel when the film is flexed in the direction of the outlet section under the influence of a pressure difference between the two sides of the film, when the valve is coupled to an underpressure, and when the inlet section is at least partially open.

Within a given range of underpressures, the displacement of the apertures is such that the flow of a fluid through the channel is blocked or significantly restricted, which constitutes a self-closing function of the valve. The applicable pressure range may depend on a number of parameters, including the size of the valve, the thickness and material of the film, the dimensions, shape and location of the apertures, the number of apertures.

The displacement may be such that the apertures are pressed against the inner surface of the channel, thereby fully or partially closing off the apertures.

The invention is further related to a suction cup consisting of or comprising a valve according to the invention. The valve may be integrated in the suction cup, for example in a conical or bellows-shaped contact portion of the cup, or in a neck portion of the cup. As the film is integrated in the body of the cup, the suction cup can be made at the same dimensions as existing suction cups. No height increase is required for housing an external valve as in presently known active or passive self-closing cups. A compact gripper design is thereby enabled.

The invention is however also related to the use of a stand-alone valve in accordance with the invention, in combination with a suction cup as known in the prior art.

The invention is in particular related to a valve comprising a fluid channel extending in a longitudinal direction between an inlet section and an outlet section of said fluid channel, wherein the valve is configured to be directly or indirectly coupled to an underpresssure source at the channel's outlet section, said fluid channel having an inner surface and an outer surface,
characterized in that the valve further comprises a flexible film mounted in the fluid channel and oriented transversely with respect to said longitudinal direction, the film comprising apertures which are located and dimensioned so that :
- a fluid flow through the channel is enabled when the film is not deformed,
- the film flexes in the direction of the channel's outlet section under the influence of said underpressure source when the outlet section is coupled thereto and when the inlet section is at least partially open,
- within a given range of applicable underpressures applied by the source, the flexing of the film causes the apertures to be displaced in the direction of the outlet section, thereby blocking or significantly restricting said flow through the channel.

According to an embodiment, the inner surface of the fluid channel comprises a circumferential extension located so that when the film is flexed in the direction of the outlet section, the apertures are displaced towards or pressed against the circumferential extension.

According to an embodiment, said circumferential extension is shaped as part of a torus.

According to an embodiment, the film has an essentially constant thickness except for a centrally placed elevated portion of the film.

According to an embodiment, the film comprises radially oriented rib portions.

According to an embodiment, said apertures form the only passage for said fluid flowing from one side of the film to the other side when the apertures are not closed off.

According to an embodiment, the film is an at least partially porous film comprising pores distributed evenly across the film and enabling said flow to pass through passages from one side of the film to the other side, and wherein the apertures configured to be displaced in the direction of the inner surface of the air channel consist of passages lying in the vicinity of the film's outer circumference.

According to an embodiment, the film is integral with the fluid channel.

The invention is also related to a suction cup consisting of or comprising a valve according to the invention.

According to an embodiment, the suction cup comprises a neck portion and a contact portion, the contact portion comprising an inner surface and an outer surface, said contact portion further having a mouth configured to be placed in contact with a surface and wherein the film is mounted in the contact portion or in the neck portion.

According to an embodiment of the suction cup according to the invention:
- the contact portion consists of a first part fixed to or uniform with the neck portion and a second part attached to the first part along an interface, the second part extending between said interface and the mouth of the contact portion,
- the first part of the contact portion is formed of a first material and the second part is formed of a second material,
- the second material is more flexible than the first material.

According to an embodiment, the contact portion is shaped as a cone or as a bellows.

According to an embodiment, at least the contact portion is formed of a self-healing material.

The invention is also related to an implement comprising a plurality of suction cups according to the invention.

The invention is also related to a method for gripping an object with an implement according to the invention, wherein said implement is a vacuum gripper, by gripping a contact surface of the object, the method comprising the steps of :
- placing the array of suction cups on the contact surface, so that a first group of cups are in contact with a surface of the object and a second group of cups are not in contact with said surface,
- connecting the suction cups to a single vacuum pump or to one more separate vacuum pumps, wherein the pressure applied by said source or sources is configured so that the cups of the first group are gripping the object, while an air flow through the cups of the second group is blocked or significantly restricted under the influence of the flexing of the films of the cups of the second group.

### Brief description of the figures

Figures 1a to 1c illustrate the physical features and the self-closing function of a suction cup according to an embodiment of the invention, wherein the flexible film is a film comprising a number of apertures.
Figures 2 to 7 illustrate alternative embodiments of a suction cup according to the invention.
Figure 8 illustrates a suction cup wherein the flexible film is a porous film.
Figure 9 illustrates a suction cup according to the invention formed of two different materials.
Figures 10a-10c illustrate a self-closing valve in accordance with an embodiment of the invention.
Figure 11 illustrates a valve according to the invention combined with a standard suction cup.
Figure 12 shows a number of parameters which may influence the sensitivity of the self-closing function of a suction cup according to the invention.

### Detailed description of the invention

Embodiments of the invention will first be described wherein a valve according to the invention is integrated in a suction cup suitable for a vacuum gripper operable in normal atmospheric conditions. In other words, the fluid flowing the through the cup is air and the underpressure source is a vacuum pump. The invention is not limited to these embodiments and alternatives will be described later in this text.

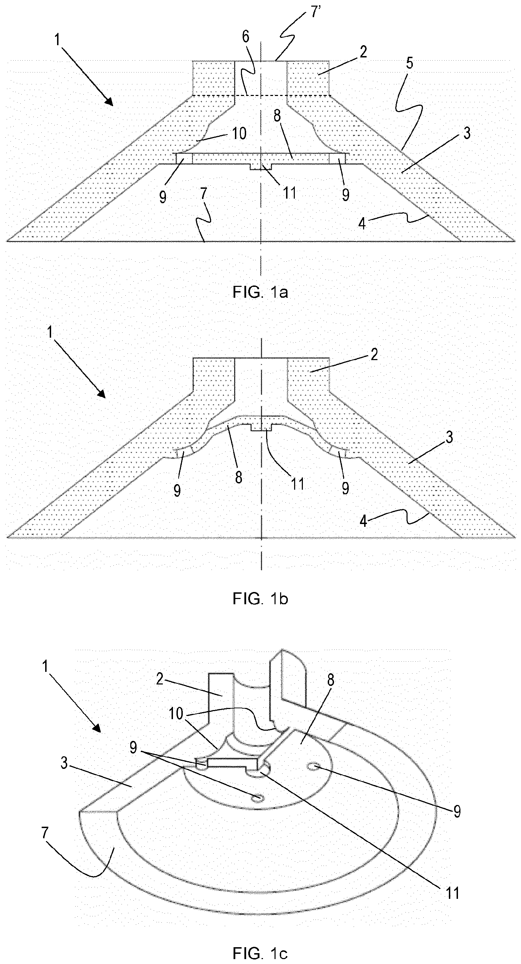

Figures 1a and 1b illustrate the working principle of a suction cup according to an embodiment of the invention, illustrated also in a cut-away 3D view in Figure 1c. The invention is not limited to this particular embodiment and includes other variants as will be described later. The working principle is however the same for all these variants.

As seen in Figure 1a, the suction cup 1 is an axisymmetric component comprising a contact portion 3 and a neck portion 2. The contact portion 3 is formed as a hollow cone comprising an inner surface 4 and an outer surface 5 and extending between a narrow end 6 and a wide end 7, the latter being hereafter referred to as the mouth 7 of the contact portion 3. The mouth 7 is to be placed in contact with an object to be gripped when the cup is integrated in a vacuum gripper for example. The neck portion 2 is a tube element attached to the narrow end 6 of the contact portion 3. In the embodiment shown, the neck portion 2 is integrally formed with the contact portion 3.

Attached to the inner surface 4 is a flexible film 8, mounted between the neck portion 2 and the mouth 7 of the contact portion 3. The film 8 has a circular shape and is attached to the inner surface 4 along its circular circumference. In the embodiment shown, the film 8 is integrally formed with the contact portion 3, and coaxially arranged with respect to said contact portion 3. The film 8 is flexible in the sense that it is deformable elastically by bending relative to its circumferential attachment to the inner surface 4, resulting in a bulging deformation. Hereafter and in the appended claims, this bulging deformation is what is referred to as 'flexing' of the film 8. In the embodiment shown, the film is parallel to the mouth 7 of the contact portion 3 when the film is not flexed. According to other embodiments, the film may be pre-formed to a shape other than shown in the drawings, when the film is in the unflexed state.

In the embodiment shown, the film 8 is provided with four apertures 9 in the vicinity of its circumference. The film 8 may be formed of an airtight material, i.e. prohibiting essentially any air flow from one side of the film to the other except through the apertures 9. Materials allowing a limited airflow are however applicable as well, as will be described later, but for the sake of explaining the working principle, the film's material is regarded as essentially airtight.

In operation, the suction cup's neck portion 2 is coupled to a vacuum pump (not shown). The cup 1 may be part of an array of identical cups which together form a vacuum gripper. When the vacuum pump is turned on while the mouth 7 of the contact portion 3 is at least partially open, an air flow is created from the mouth 7 to the neck portion 2, with air flowing through the apertures 9. This may be the case when one or more cups of a gripper array are not or only partially in contact with an object surface, or the gripper array is used for picking up a curved or porous object, or an object with holes for example.

In the context of a walking robot for example, this could be the case when one or more cups are not fully in contact with the surface on which the robot is walking, or when said surface has openings or holes in it.

The apertures 9 form a restriction to the air flow, so that a pressure difference is created between the two sides of the film 8. This pressure difference flexes the film 8 in the direction of the neck portion 2. Below a given vacuum pressure, the film flexes to such a degree that the situation illustrated in Figure 1b is reached. It is seen that the flexing of the film causes the apertures 9 to be closed off by the inner surface 4 of the contact portion 3. At this point, a force equilibrium is reached between the air pressure difference on the one hand and the reaction forces generated by the contact between the film 8 and the inner surface 4 and the elasticity of the film 8 on the other hand. In other words, the vacuum force presses the film 8 against the surface 4, thereby closing off the apertures 9.

As soon as the apertures 9 are closed off, air flow through the cup 1 is blocked as long as the vacuum pump is active. The self-closing of the cup is thus realized without any change to the outer shape of the cup compared to a standard suction cup, i.e. a cup not provided with the film 8. Compared to prior art active or passive self-closing cups, a cup according to this embodiment of the invention is compact and lightweight, enabling its use in a vacuum gripper able to work in confined spaces. The self-closing function is obtained without complex additions to the standard cup design.

When the vacuum pump is turned off, the film 8 is no longer pressed against the inner surface 4 by the vacuum pressure and the film returns to its undeformed state shown in Figure 1a.

The self-closing is of course only desired when the cup is not or not fully in contact with a given surface. When the cup is fully operational, for example actively gripping an object, the self-closing function is disabled as the interior space of the cup is quickly brought to a common vacuum pressure, leaving no time for a pressure difference to build up between the two sides of the film 8. Gripping and releasing an object with a suction cup comprising a film 8 therefore takes place in the same way as with a cup that is not provided with the film 8. The same is true in the case of activating or deactivating a suction cup in a walking robot for example.

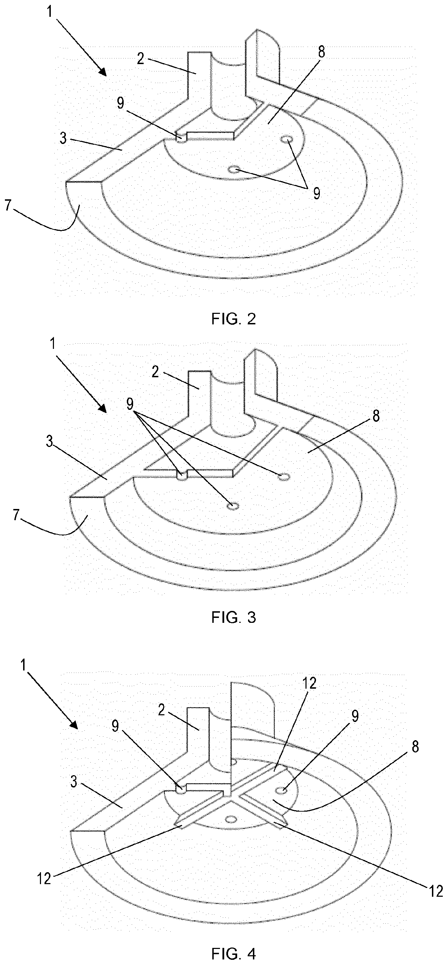

With reference again to Figures 1a-1c, it is seen that according to this particular embodiment, the inner surface 4 is provided with a circumferential extension 10 having the form of part of a torus and lying adjacent the apertures 9 in the direction of the air flow generated by the vacuum pump. This feature facilitates the closure of the apertures 9 against the bulge formed by the extension 10, as is visualized in Figure 1b. Provided that the shape or dimensions of the apertures 9 and/or the flexibility of the film 8 are suitably designed, the self-closing function can however equally work with an extension of another shape or without any extension 10, as illustrated in Figure 2 for example.

Also in the embodiment shown in Figures 1a - 1c, the film comprises a centrally placed elevated portion 11 that acts as a reinforcement of the film 8, to avoid rupture of the film. If the film itself is sufficiently strong and/or thick however, this elevated reinforcement portion may be omitted (see also Figure 2).

Further alternative embodiments are illustrated in Figures 3 to 7. The height location of the film 8 within the cone of the contact portion 3 may differ, as illustrated in Figure 3, showing a film 8 of higher diameter placed closer to the mouth 7 of the contact portion 3 compared to the embodiment of Figure 2.

As an alternative way of reinforcing the film 8, said film may be provided with radially placed reinforcement ribs 12, as illustrated in Figure 4.

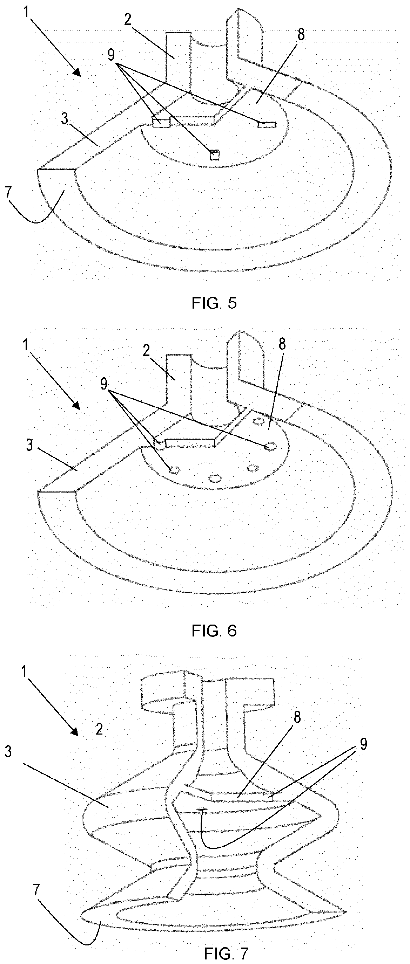

The shape of the apertures 9 could be rectangular instead of circular, as illustrated in Figure 5. Other shapes are equally possible, for example slits, plus signs or other. Also, the number of apertures 9 may be higher than 4, as illustrated in Figure 6, or lower than four. A single opening is also possible.

Figure 7 shows an embodiment of a suction cup according to the invention wherein the contact portion 3 has a bellows shape, comprising alternately arranged sections flaring outwards and inwards. The flexible film 8 comprising apertures 9 is located in the first outwardly flaring section in the embodiment shown, but could alternatively be placed elsewhere along the height of the contact portion 3. The number of bellows could be higher than shown in the drawing.

In any of the above-described embodiments, the film 8 could be mounted in the neck portion 2 instead of in the contact portion 3. Possibly, the neck portion 2 may be in that case be provided with a torus-shaped extension similar to the extension 10 shown in Figures 1a-1c.

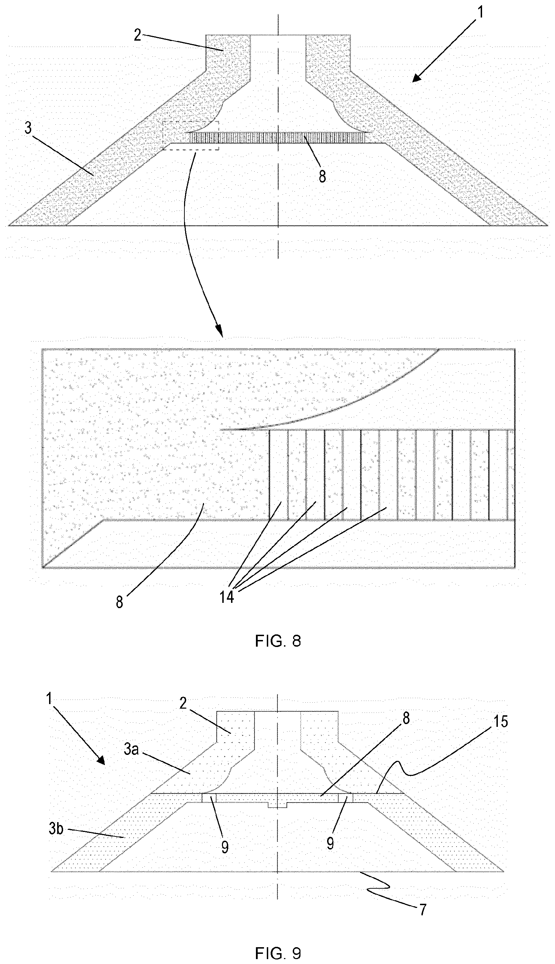

Figure 8 illustrates an embodiment wherein the flexible film 8 is a porous film, comprising a plurality of air passages 14 distributed across its entire surface, as illustrated in the enlarged detail included in Figure 8 wherein the passages are represented as parallel narrow channels. In reality, the air passages could be more irregular shaped however, as in a foam or spunge-type structure comprising small interconnected air pockets. The density and dimensions of the air passages and the flexibility of the film are such than when this cup is coupled to a vacuum pump, the film 8 flexes in the same way as in the above-described embodiment, until a circumferential portion of the film is pressed against the inner surface 4, thereby closing off the air passages lying in said circumferential portion, while leaving the passages in the remaining central portion of the film open. However, due to the reduced total number of open passages, the air loss through these centrally placed passages is significantly reduced and the cup can be regarded as essentially self-closed.

Another alternative embodiment includes a film that is porous only in a circumferential part of the film and that is air-tight in the remaining central part.

Figure 9 illustrates an embodiment wherein the suction cup is formed of two different materials. In this embodiment, the contact portion 3 consists of a first part 3a that is integral with the neck portion 2 and a second part 3b that is airtightly attached to the first part along an interface 15, the second part 3b extending between said interface 15 and the mouth 7 of the contact portion. The first and second parts 3a and 3b of the contact portion are formed of different materials, with the material of part 3b being significantly more flexible than the material of part 3a. The result is a versatile cup that is capable of attaching to irregular or rough surfaces due to the high flexibility and deformability of the contact part 3b. The higher stiffness of the neck portion 2 and upper part 3a of the contact portion benefits the stability of the cup during transport of an object at a given lateral speed. In the embodiment shown, the flexible film 8 belongs to the lower-flexibility part 3b and is preferably integrally formed therewith.

The embodiment of Figure 9 is applicable using various combinations of materials. According to a particularly advantageous embodiment, the materials of the two parts, i.e. on the one hand the combined neck portion 2 and the top part 3a of the contact portion, and on the other hand the lower part 3b of the contact portion, are formed of reversible elastomers, i.e. elastomers comprising reversible bonds in their network. Reversible bonds are dynamic covalent or physical bonds. The parts are produced separately and bonded in the solid state through a heat-cool cycle resulting in a strong bond through crosslinking. An example of suitable materials is the combination of DPBM-FT3000-r1 and DPBM-FT5000-r0.5 respectively for parts 2+3a and 3b. DPBM stands for 1,1-(Methylenedi-4,1-phenylene)-bismaleimide. FTxxx stands for furan functionalized triamine Jeffamines, resulting from an epoxy amine reaction of Furfuryl glycidyl ether on the Jeffamine. The Jeffamine T3000 and T5000 stand for trifunctional polypropylene glycol backbones and have an average molar masse of 3240 g/mol or 5709 g/mol, respectively.

The first material (DPBM-FT3000-r1 ) is relatively stiff, having a Young's modulus of 54MPa, while the second material (DPBM-FT5000-r0.5) is hyper-elastic, having a Young's modulus of 0.12MPa. The film 8 is also formed of the hyper-elastic material. An applicable heat-cool cycle for these materials includes bringing the parts into contact, heating for one hour at 90°C after which the assembly is left to cool to room temperature and maintained at room temperature for about 24 hours. The bond is created through the reversible Diels-Adler covalent reaction. At 90°C, the reaction equilibrium of the Diels-Alder reaction shifts to the unbound state, reducing the number of Diels-Alder crosslinks and creating reactive furan and maleimide groups. At room temperature, the reaction equilibrium shifts to the bound state, recreating a large number of Diels-Alder crosslinks inside of the elastomeric network, as well as across the interface 15.

The materials DPBM-FT3000-r1 and DPBM-FT5000-r0.5 used in the latter embodiment are additionally advantageous because they are known to exhibit self-healing properties through the spontaneous restoration of broken Diels-Adler bonds caused by tears or ruptures in the material. Ruptures in the hyper-flexible material can self-heal at room temperature. The stiffer material can be self-healed by heating the material. It was found that a damaged suction cup comprising damage to both the stiff part and the flexible part could be restored within the hour by heating it to 80°C. Besides DPBM-FT3000-r1 and DPBM-FT5000-r0.5, other materials known to have self-healing properties can be used in a suction cup according to the invention.

As stated above, the invention is not limited to suction cups, but it is related more broadly to a valve comprising a flexible film comprising apertures. The suction cup shown in Figures 1a to 1c may for example be seen as an embodiment of a valve in accordance with the invention, or as a suction cup with a valve of the invention integrated therein. For example, and using the wording of appended claim 1, the contact portion 3 can be regarded as a valve according to the invention, comprising a fluid channel (the contact portion 3 as such) extending in a longitudinal direction (defined by the central axis of the cup), having an inner surface 4 and an outer surface 5 and extending in a longitudinal direction between an inlet section (the mouth 7) and an outlet section (the narrow end 6 of the cone), with a flexible film 8 provided with apertures 9 mounted transversely to the longitudinal direction.

Alternatively, the cup as a whole can be seen as an embodiment of a valve according to the invention. The cup 1 forms a fluid channel extending between inlet section 7 and outlet section 7' at the end of the neck portion 2. If the film 8 is mounted in the neck portion 2, said neck portion as such could be seen as a valve according to the invention, integrated in the suction cup 1.

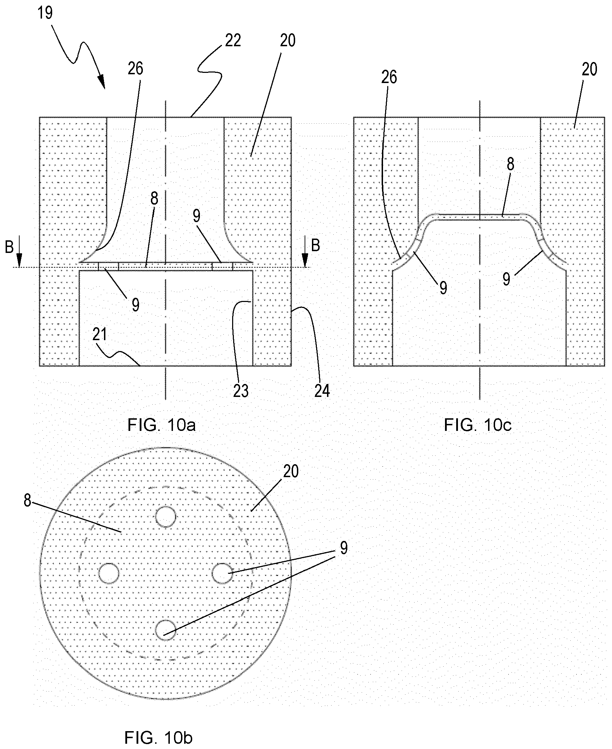

The invention is however also related to a stand-alone valve, i.e. not integrated into another tool such as a suction cup. An example thereof is shown in Figures 10a to 10c. The images in Figures 10a and 10b show two section views of the valve 19 when the valve is not self-closed. The case is described hereafter according to which the valve is configured to conduct air when coupled to vacuum pump, but alternatives to this case are possible as set out later. It is seen that the valve comprises an axisymmetric hollow cylindrical body 20 which forms an air channel extending between an inlet section 21 and an outlet section 22, the latter being configured to be coupled directly or indirectly to the vacuum pump. The channel has an inner surface 23 and an outer surface 24, and extends in a longitudinal direction from the inlet section 21 to the outlet section 22. A flexible film 8 provided with apertures 9 is mounted in the channel, transversely with respect to said longitudinal direction. The self-closing function of the film 8 is the same as described above for the self-closing suction cup, as illustrated in Figure 10c. In the embodiment shown, the inner surface of the channel comprises a torus-shaped extension 26, which facilitates the self-closing function in the same manner as described above for the extension 10 shown in Figures 1a-1c. However, the extension 26 may be omitted provided that the film 8 is sufficiently flexible.

The various embodiments of the film 8, including a fully or partially porous film, as well as the materials of the film as described in relation to a suction cup are applicable also in a valve according to the invention.

The outlet section 22 is preferably provided with means for coupling it to a vacuum pump, for example a thread section or a coupling flange (not shown in the drawings).

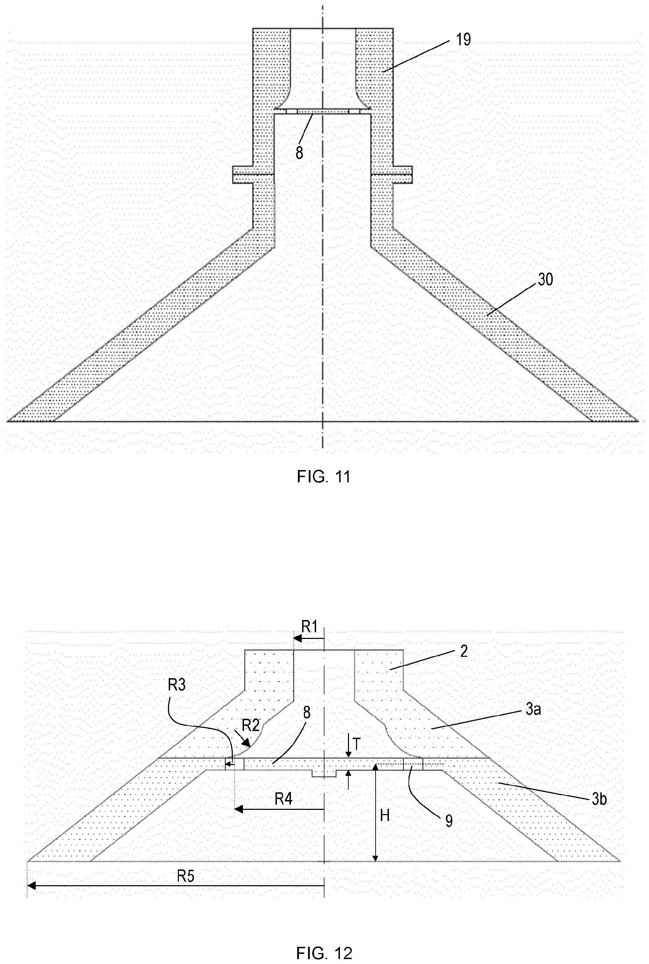

A valve 19 in accordance with Figures 10a-10c or any other embodiment may be applied in combination with any vacuum-operated tool for providing a self-closing function. For example, the valve could be attached to a standard suction cup 30, as illustrated in Figure 11. As the flexible film 8 requires only limited space, its application in combination with other elements such as standard suction cups, enables to produce compact and versatile tools.

As stated, the invention is applicable to any implement wherein suction cups can be used. A vacuum gripper or a walking robot are just two examples of such implements. Any type of vacuum gripper can be fitted with suction cups according to the invention. The invention is especially suitable for producing flexible suction cups, as for example the two-material cups described above. These cups can be implemented in a gripper that has itself a flexible support surface onto which the suction cups are mounted, thereby realizing an octopus-arm-type gripping implement. Walking robots refer to any type of implement that is capable of advancing on a surface by activating suction cups, for example mounted on a pair of caterpillar tracks.

The following applies to the stand-alone valve 19 as well as to a suction cup according to the invention. The invention is not limited to valves and suction cups configured to be coupled to a vacuum pump for pumping air. First of all, the valves and cups can work as described above in any gaseous environment other than air. Also, valves and cups according to the invention may be configured to conduct a liquid rather than a gaseous substance through the fluid channel. In this case, the working principle as described above remains the same, but it may be required to make some adaptations, for example in terms of the size of the apertures, the thickness material of the film, the material of the film or the channel, etc. Suction cups according to the invention configured to conduct a liquid may be thus be adapted to work in an underwater environment or valves according to the invention could be used as check valves in a hydraulic circuit.

The embodiment of Figure 8 illustrates that the film 8 need not be formed of a material that is impenetrable by the fluid. What matters is that the film is able to deform under the influence of an underpressure so that apertures in the vicinity of its circumference can be displaced in the above-described manner, thereby blocking or restricting the flow through the cup or valve. Realizing the self-closing function of a suction cup or valve according to the invention may be defined within the present context as effecting either the 100% blocking of fluid flow through the cup/valve, or a significant restriction of said flow when the film is flexed in the manner described above. According to embodiments of the invention, a significant restriction of the flow at a given underpressure is realized by a reduction by more than 80% of said flow compared to the flow occurring through the same cup or valve but without the film 8. According to other embodiments, the above percentage is higher than 90% or higher than 95%.

A restriction of the flow to less than 100% may be due to a fluid flow passing through the central portion of the film, as in the case of the porous film described above, or may be due to the apertures 9 being not 100% sealed. In the embodiments of Figures 1a-1c or 10a-10c for example, flexing of the film 8 may close off the apertures 9 in a less than airtight fashion at a first underpressure, and completely seal the apertures at a second, lower underpressure. If the air flow is significantly reduced at the first underpressure, the self-closing function can be regarded as effectively realized.

The sensitivity of the self-closing function may be defined by the underpressure at which the function is activated. This sensitivity depends on a number of parameters, including the thickness and material of the film 8 and the dimensions and location of the apertures 9 as well as the shape of the apertures and the number of apertures. A working example is described hereafter of an air-operated suction cup according to the invention, with reference to Figure 12. The dimensions indicated in the drawing are as follows : R1 (radius of the internal channel of the neck portion 2) = 2mm ; R2 (radius of the torus-shaped extension) = 1.8mm; R3 (radius of the circular apertures 9) = 0.5mm; R4 (radius of the aperture position) = 4.6mm; R5 (radius of the mouth of the contact portion) = 14.7mm ; H (Z-position of the film 8) = 5.4mm. T (thickness of the film) = 0.8mm. The suction cup is formed of two materials as described above, i.e. DPBM-FT3000-r1 for the neck portion 2 and the upper part 3a of the contact portion and DPBM-FT5000-r0.5 for the lower part 3b of the contact portion. With these parameters, it was found that air flow is already sufficiently limited to fulfil the self-closing function at an underpressure of -30kPa. Fully sealing the apertures is achieved at an underpressure of -80kPa, while a normal gripping operation is enabled when the cup is attached to an object. Deviations from the above parameter values, in particular the parameters R3 and R4, T and R2 (if a torus-shaped extension is present) and the number of apertures will influence the sensitivity. The present invention thereby enables to produce suction cups of various dimensions and usable in various fields of application.

It is emphasized that the dimensions of a suction cup or valve according to the invention may go far beyond the dimensions described hereabove by way of example. Valves and suction cups according to the invention may be produced according to any dimensions required for a specific task, including for example the transportation of large objects such as glass panels or solar panels.

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A valve (1,19) comprising a fluid channel (3,20) extending in a longitudinal direction between an inlet section (7,21) and an outlet section (6,22) of said fluid channel, wherein the valve is configured to be directly or indirectly coupled to an underpresssure source at the channel's outlet section (6,22), said fluid channel having an inner surface (4,23) and an outer surface (5,24),
**characterized in that** the valve further comprises a flexible film (8) mounted in the fluid channel and oriented transversely with respect to said longitudinal direction, the film comprising apertures (9,14) which are located and dimensioned so that :
- a fluid flow through the channel is enabled when the film (8) is not deformed,
- the film flexes in the direction of the channel's outlet section (6,22) under the influence of said underpressure source when the outlet section is coupled thereto and when the inlet section (7,21) is at least partially open,
- within a given range of applicable underpressures applied by the source, the flexing of the film (8) causes the apertures (9,14) to be displaced in the direction of the outlet section (6,22), thereby blocking or significantly restricting said flow through the channel (3,20).

2. The valve (1,19) according to claim 1, wherein the inner surface (4,23) of the fluid channel (3,20) comprises a circumferential extension (10,26) located so that when the film (8) is flexed in the direction of the outlet section (6,22), the apertures (9,14) are displaced towards or pressed against the circumferential extension (10,26).

3. The valve (1,19) according to claim 2, wherein said circumferential extension (10,26) is shaped as part of a torus.

4. The valve (1,19) according to any one of the preceding claims, wherein the film (8) has an essentially constant thickness except for a centrally placed elevated portion (11) of the film.

5. The valve (1,19) according to any one of the preceding claims, wherein the film (8) comprises radially oriented rib portions (12).

6. The valve (1,19) according to any one of the preceding claims, wherein said apertures (9) form the only passage for said fluid flowing from one side of the film to the other side when the apertures (9) are not closed off.

7. The valve (1,19) according to any one of claims 1 to 5, wherein the film (8) is an at least partially porous film comprising pores distributed evenly across the film and enabling said flow to pass through passages (14) from one side of the film to the other side, and wherein the apertures configured to be displaced in the direction of the inner surface (4,23) of the air channel (3,20) consist of passages (14) lying in the vicinity of the film's outer circumference.

8. The valve (1,19) according to any one of the preceding claims, wherein the film (8) is integral with the fluid channel (3,20).

9. A suction cup (1) consisting of or comprising a valve according to any one of the preceding claims.

10. The suction cup (1) according to claim 9, comprising a neck portion (2) and a contact portion (3), the contact portion comprising an inner surface (4) and an outer surface (5), said contact portion further having a mouth (7) configured to be placed in contact with a surface and wherein the film (8) is mounted in the contact portion (3) or in the neck portion (2).

11. The suction cup according to claim 10, wherein :
- the contact portion (3) consists of a first part (3a) fixed to or uniform with the neck portion (2) and a second part (3b) attached to the first part along an interface (15), the second part (3b) extending between said interface (15) and the mouth (7) of the contact portion,
- the first part (3a) of the contact portion is formed of a first material and the second part (3b) is formed of a second material,
- the second material is more flexible than the first material.

12. The suction cup (1) according to any one of claims 10 to 11, wherein the contact portion is shaped as a cone or as a bellows.

13. The suction cup (1) according to any one of claims 10 to 12, wherein at least the contact portion (3) is formed of a self-healing material.

14. An implement comprising a plurality of suction cups (1) according to any one of the claims 9 to 13.

15. A method for gripping an object with an implement according to claim 14, wherein said implement is a vacuum gripper, by gripping a contact surface of the object, the method comprising the steps of :
- placing the array of suction cups (1) on the contact surface, so that a first group of cups are in contact with a surface of the object and a second group of cups are not in contact with said surface,
- connecting the suction cups (1) to a single vacuum pump or to one more separate vacuum pumps, wherein the pressure applied by said source or sources is configured so that the cups of the first group are gripping the object, while an air flow through the cups of the second group is blocked or significantly restricted under the influence of the flexing of the films of the cups of the second group.
